# EUROPÄISCHE PATENTSCHRIFT

(11) **EP 1 505 711 B1**
(45) Veröffentlichungstag und Bekanntmachung des Hinweises auf die Patenterteilung: **19.05.2010**
(21) Anmeldenummer: 04015022.9
(22) Anmeldetag: 25.06.2004
(51) Int. Cl.: H02K 3/52

(54) **Elektromotor**
Electric motor
Moteur électrique

(30) Priorität: 02.08.2003 DE 10335846
(43) Veröffentlichungstag der Anmeldung: 09.02.2005
(73) Patentinhaber: ebm-papst St. Georgen GmbH & Co. KG, 78112 St. Georgen (DE)
(72) Erfinder: Lukenich, Stefan, 78269 Volkertshausen (DE)
(74) Vertreter: Raible, Hans

(56) Entgegenhaltungen:
- DE-A1- 2 040 465
- JP-A- 3 145 949
- JP-A- 6 233 483
- JP-A- 11 018 345
- JP-A- 2002 233 095

## Beschreibung

Die Erfindung betrifft einen Elektromotor mit einer mehrphasigen Statorwicklung in Stern-Parallel-Schaltung.

Bei mehrphasigen Elektromotoren bereitet die Verschaltung der einzelnen Stränge (Phasen) nicht selten Probleme, da beispielsweise Verbindungsdrähte viel Platz einnehmen und schwierig zu montieren sind.

Aus der JP 3-145 949A(1991) ist ein dreiphasiger Elektromotor bekannt, dessen Statorwicklung in Stern-Reihe-Schaltung geschaltet ist. Dabei sind pro Strang zwei Teilwicklungen in Reihe geschaltet. Die Teilwicklungen sind auf Wickelkörper gewickelt, die nach Art von gedruckten Schaltungen ausgeführt sind und Querverbindungen zwischen einzelnen Teilwicklungen enthalten.

Aus der JP 11-018345A(1999) sind zwei Varianten eines mehrphasigen Synchronmotors bekannt. Bei beiden Varianten ist auf den Wickelköpfen der Statorwicklung ein Schaltring angeordnet, in welchem bandförmige Leiter vorgesehen sind, die mit den Anschlussdrähten von Teilwicklungen des Stators verbunden werden.

Eine sehr ähnliche Lösung ist bekannt aus der JP 06-233483A(1994), die ebenfalls einen mehrphasigen Synchronmotor betrifft. Auch dort ist auf den Wickelköpfen der Statorwicklung ein Schaltring angeordnet, in den Drähte von den Teilwicklungen eingefädelt und dort angelötet werden müssen.

Es ist deshalb eine Aufgabe der Erfindung, einen neuen Elektromotor mit einer mehrphasigen Statorwicklung in Stern-Parallel-Schaltung bereit zu stellen.

Nach der Erfindung wird diese Aufgabe gelöst durch einen Elektromotor gemäß Patentanspruch 1. Ein solcher Elektromotor hat eine mehrphasige Statorwicklung in Stern-Parallel-Schaltung, d.h. die einzelnen Stränge haben jeweils mehrere parallel geschaltete Teilstränge und daher einen niedrigen Widerstand, was solche Motoren besonders für Betrieb an niedrigen Spannungen geeignet macht. Die Verwendung eines Sternpunktrings mit radialen Fortsätzen ermöglicht es, die Teilstränge über diese radialen Fortsätze zu wickeln und an einem Ende mit deren freien Enden zu verbinden, und die anderen Enden der Teilstränge können widerstandsarm und mit geringem Aufwand mit dem jeweils zugeordneten benachbarten Schaltring verbunden werden, so dass sich ein symmetrischer Aufbau der Statorwicklung ergibt. Dabei können der Sternpunktring und seine radialen Fortsätze mit dem erforderlichen Querschnitt ausgebildet werden, um die ohmschen Verluste im Sternpunktring niedrig zu halten.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen, sowie aus den übrigen Unteransprüchen. Es zeigen:
- Fig. 1: eine raumbildliche Darstellung eines erfindungsgemäßen Stators,
- Fig. 2: eine Draufsicht auf den Stator aus Fig. 1,
- Fig. 3: eine Seitenansicht auf den Stator aus der Richtung II aus Fig. 2,
- Fig. 4: eine Draufsicht auf einen Schaltring,
- Fig. 5: eine Draufsicht auf einen Sternpunktring,
- Fig. 6: eine Draufsicht auf einen Isolierring,
- Fig. 7: eine Draufsicht auf einen Sternpunktring,
- Fig. 8: eine raumbildliche Darstellung eines Hämmerchens mit einem Teilstrang,
- Fig. 9: eine Draufsicht auf einen Elektromotor mit dem Stator aus Fig. 2 und einem 12-poligen Permanentmagnetrotor,
- Fig. 10: eine schematische Darstellung des Elektromotors aus Fig. 9 in abgewickeltem Zustand,
- Fig. 11: eine schematische Darstellung der Sternpunktanordnung des Stators aus elektrischer Sicht, und
- Fig. 12: eine schematische Darstellung einer Endstufe in Form einer Vollbrückenschaltung.

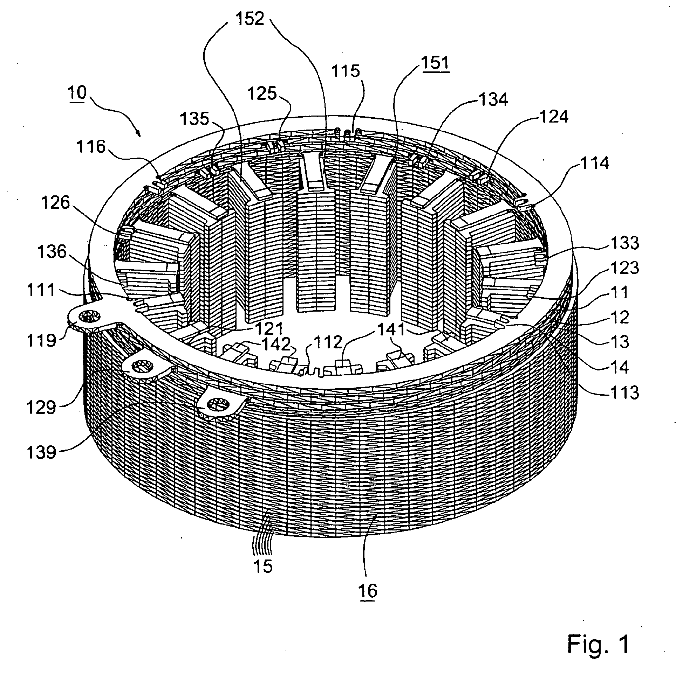

**Fig. 1** zeigt eine raumbildliche Darstellung eines erfindungsgemäßen Stators 10.

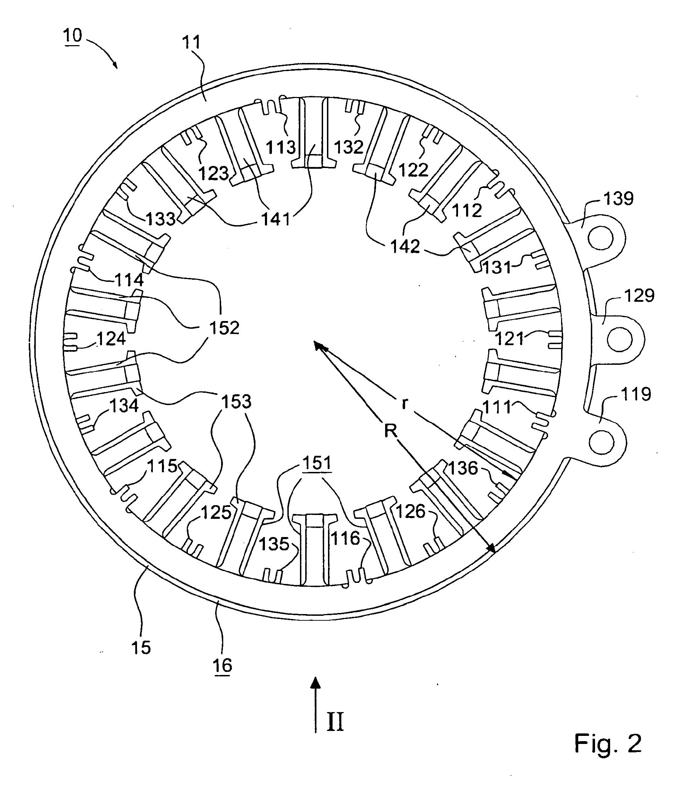

**Fig. 2** zeigt eine Draufsicht auf den Stator 10 aus Fig. 1.

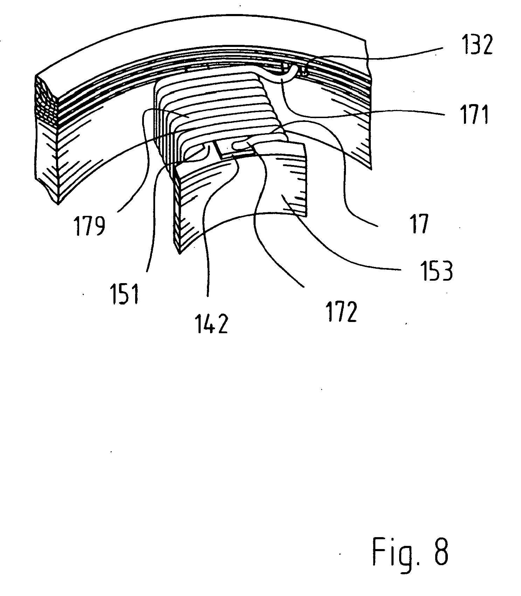

Der Stator 10 weist drei Schaltringe 11, 12, 13, einen Sternpunktring 14, ein aus mehreren Statorblechen 15 bestehendes Statorblechpaket 16, 18 Hämmerchen (Statorpole) 151 mit Polschenkeln 152 und Polschuhen 153 und 18 Teilstränge 17 (dargestellt in Fig. 8) auf.

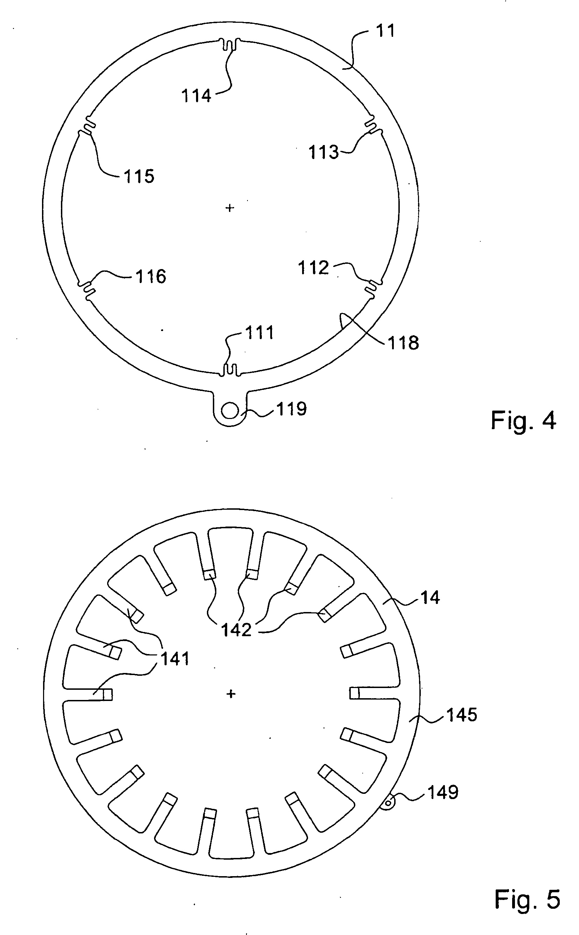

Der Schaltring 11 (Fig. 4) weist sechs Kontakte 111 bis 116 sowie einen Anschluss 119 auf, der Schaltring 12 weist sechs Kontakte 121 bis 126 sowie einen Anschluss 129 auf, und der Schaltring 13 weist sechs Kontakte 131 bis 136 sowie einen Anschluss 139 auf.

Der Sternpunktring 114 weist 18 Kontaktierungsfortsätze 141 auf, welche jeweils im Bereich der Polschuhe 153 ein Kontaktierungsende 142 aufweisen.

Das Statorblechpaket 16 ist in diesem Ausführungsbeispiel aus 28 konzentrisch angeordneten Statorblechen 15 aufgebaut.

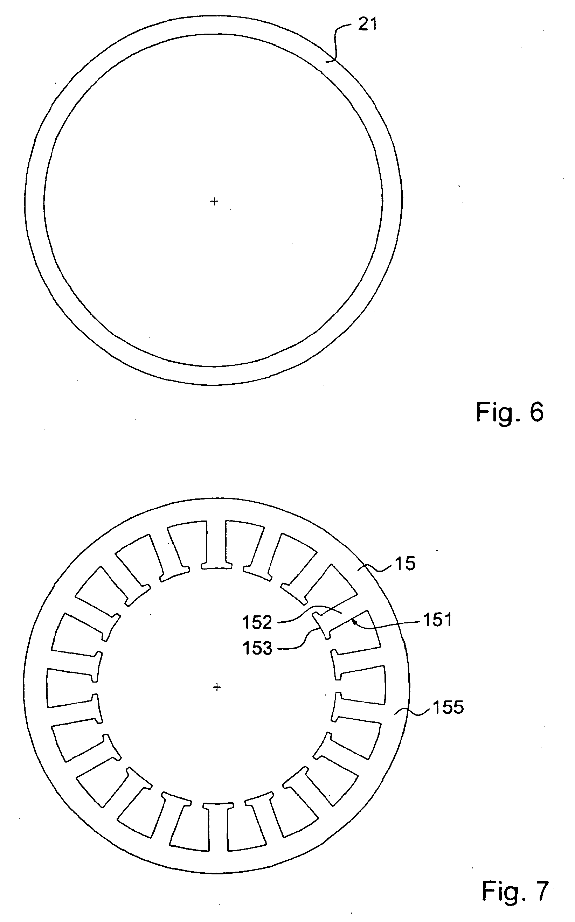

Der im wesentlichen hohlzylinderförmige Stator 10 hat beispielsweise eine Höhe H = 26 mm oder H = 30 mm und einen äußeren Durchmesser D = 80 mm. Die Darstellung in Fig. 1 ist zur besseren Darstellung in der Höhe gedehnt. Die Breite des kreisförmigen (hohlzylinderförmigen) Teils 155 (vgl. Fig. 7) der Statorbleche 15, gemessen von dem inneren Radius r bis zum äußeren Radius R des Stators 10, beträgt in diesem Ausführungsbeispiel 4,5 mm.

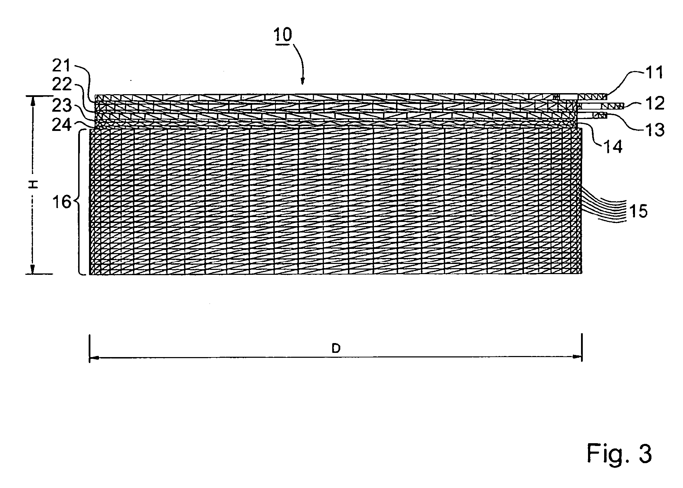

**Fig. 3** zeigt eine Seitenansicht auf den Stator 10 aus der Richtung II aus Fig. 2.

Der Stator 10 weist als Grundkörper das Statorblechpaket 16 aus ferromagnetischem Material, beispielsweise Weicheisen, auf.

Auf dem Statorblechpaket 16 ist ein Isolierring 24, der Sternpunktring 14, ein Isolierring 22, der Schaltring 13, ein Isolierring 22, der Schaltring 12, ein Isolierring 21 und der Schaltring 10 angeordnet.

Die Isolierringe 21 bis 24 bestehen aus einem Isolator aus einem elektrisch schlecht leitenden Material, beispielsweise Keramik, Harz oder Kunststoff.

Die Schaltringe 11 bis 13 und der Sernpunktring 14 sind aus einem elektrisch gut leitenden Material, beispielsweise Kupfer, gefertigt und sind untereinander und gegenüber dem Blechpaket 16 durch die Isolierringe 21 bis 24 elektrisch isoliert.

Die Gesamthöhe H der Statoranordnung beträgt in diesem Ausführungsbeispiel 30 mm. Die Höhe setzt sich wie folgt zusammen:
- Höhe der Statorbleche: 28 * 0,86 mm = 24 mm
- Höhe der Schaltringe: 3 * 1 mm = 3 mm
- Höhe des Sternpunktrings: 1 mm
- Höhe der Isolierringe: 4 * 0,5 mm = 2 mm

**Fig. 4** zeigt eine Draufsicht auf den erfindungsgemäßen Schaltring 11. Der Schaltring 11 weist einen hohlzylindrischen Bereich 118 auf, von dem die sechs Kontakte 111 bis 116 radial nach innen und der Anschluss 119 radial nach außen ragen. An den Kontakten 111 bis 116 wird jeweils ein Ende eines Teilstrangs 17 befestigt. Hierfür bilden die Kontakte 111 bis 116 ein U, in dem der Wicklungsdraht befestigt werden kann.

Der Schaltring 11 ist zumindest in dem hohlzylindrischen Bereich 118 eben, und er hat bevorzugt eine Höhe von 0,6 mm bis 1,3 mm. Der Schaltring 11 weist in seinem ringförmigen (hohlzylindrischen) Bereich 118 bevorzugt im wesentlichen die gleiche Breite wie der ringförmige Bereich 155 (vgl. Fig. 7) der Statorbleche 15 auf. Dadurch hat der Schaltring einen großen Querschnitt und einen geringen Widerstand.

Die Schaltringe 12 und 13 sind identisch aufgebaut.

**Fig. 5** zeigt eine Draufsicht auf den erfindungsgemäßen Sternpunktring 14. Der Sternpunktring 14 bildet den elektrischen Sternpunkt für die Teilstränge 17 und ist - dies ist unüblich für einen Sternpunkt - als Ring ausgebildet. Die Kontaktierungsfortsätze 141 erstrecken sich auf dem Blechpaket bis zu den Polschuhen 153 und dienen zur Kontaktierung eines Endes der um die Hämmerchen gewickelten Teilstränge. Hierzu weisen die Kontaktierungsfortsätze 141 jeweils ein Kontaktierungsende 142 auf, welches zur Kontaktierung geeignet und elektrisch nicht isoliert ist. Der übrige Teil der Kontaktierungsfortsätze ist bevorzugt elektrisch isoliert, um einen Kurzschluss des Wicklungsdrahts zu vermeiden. Zur Isolierung eignet sich insbesondere ein Schutzlack.

Bevorzugt weist auch der Sternpunktring 14 einen Anschluss 149 auf, über den das Potential am Sternpunktring 14 gemessen wird. Dies ermöglicht beispielsweise eine sogenannte Sensorless-Detektion, bei der die Rotorstellung ohne Rotorstellungssensoren gemessen wird.

Der Sternpunktring 14 ist zumindest in dem ringförmigen (hohlzylindrischen) Bereich 145 eben, und er hat bevorzugt eine Höhe von 0,6 mm bis 1,3 mm. Der Sternpunktring 14 weist in seinem ringförmigen Bereich 145 bevorzugt im wesentlichen die gleiche Breite wie der ringförmige Bereich 155 (vgl. Fig. 7) der Statorbleche 15 auf. Dadurch hat der Schaltring 14 einen großen Querschnitt und einen geringen Widerstand

**Fig. 6** zeigt eine Draufsicht auf den Isolierring 21. Dieser ist möglichst dünn, um die Höhe des Stators 10 gering zu halten.

Bei einer bevorzugten Weiterbildung weisen der Isolierring 24 und/oder der Isolierring 23 Fortsätze auf, welche den Fortsätzen 141 des Sternpunktrings 14 entsprechen und eine sichere Isolierung des Sternpunktrings 14 von dem Statorblechpaket 16 und/oder den Teilsträngen 17 gewährleisten.

**Fig. 7** zeigt eine Draufsicht auf eines der Statorbleche 15. Das Statorblech 15 weist einen ringförmigen Bereich 155 sowie - in Kombination mit den übrigen Statorblechen - 18 Hämmerchen 151 auf, welche jeweils aus einem in die Mitte ragenden Polschenkel 152 und einem Polschuh 153 an dessen Ende bestehen.

**Fig. 8** zeigt eine raumbildliche Darstellung eines Hämmerchens 151 mit einem Teilstrang (Spule, Wicklung) 17. Die Spule 17 besteht aus einem Wicklungsdraht 179, welcher ein erstes Ende 171 und ein zweites Ende 172 aufweist.

Das erste Ende 171 ist mit dem Kontakt 132 des dritten Schaltrings 13 verbunden, und das zweite Ende 172 ist mit dem Kontaktierungsende 142 des Sternpunktrings 14 verbunden, z.B. durch Schweißen.

Die Spule 17 weist in diesem Ausführungsbeispiel 30 Windungen auf, und der Wicklungsdraht hat einen Durchmesser von ca. 0,7 mm.

Die Befestigung des ersten und/oder zweiten Endes 171, 172 an den Kontakten der Schaltringe 11, 12, 13 geschieht beispielsweise durch Schweißen, Löten, Einrasten oder Festklemmen (Festcrimpen). Bevorzugt ist auch eine Kontaktierung über Stecker möglich.

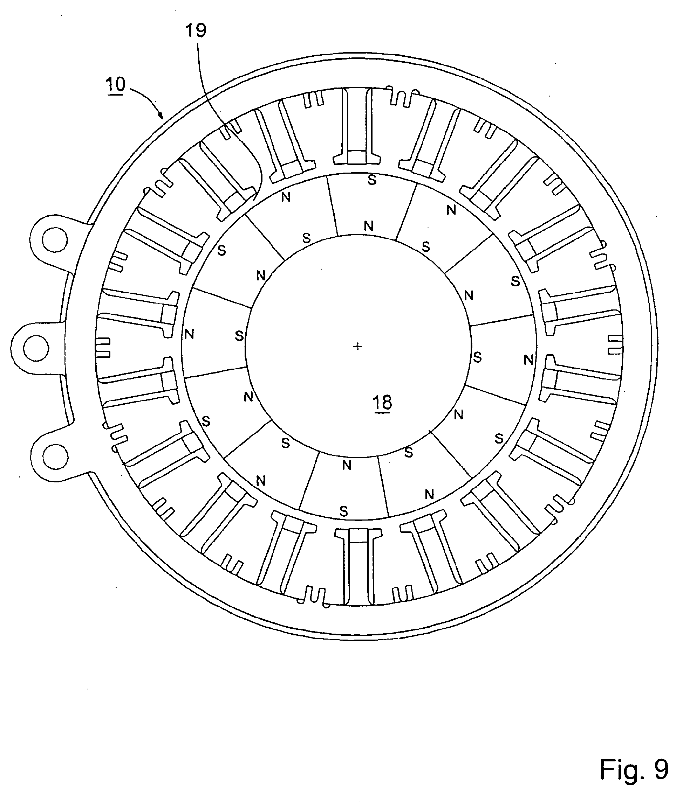

**Fig. 9** zeigt eine Draufsicht auf einen Elektromotor mit einem erfindungsgemäßen Stator 10 und einem 12-poligen Rotor 18. Der Stator ist bereits in Fig. 2 beschrieben.

Zwischen dem Rotor 18 und dem Stator 10 befindet sich ein Luftspalt 19.

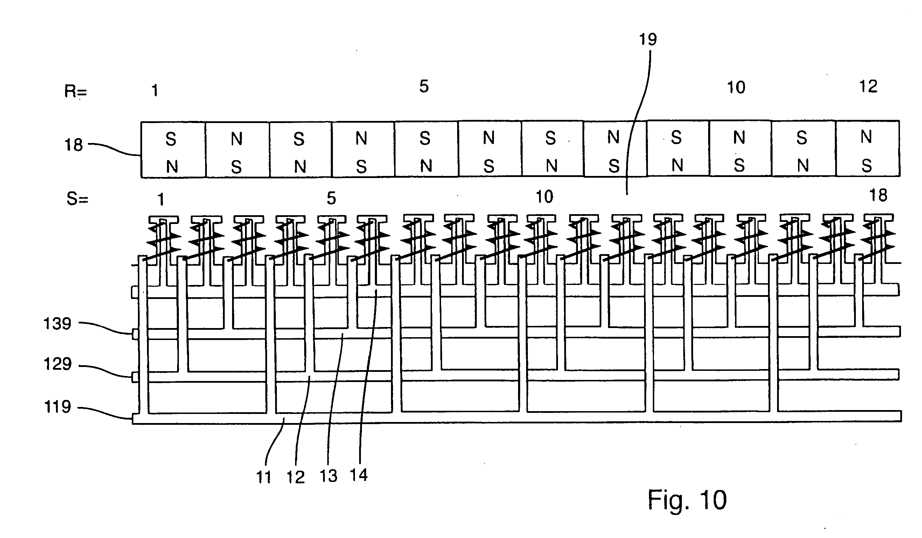

**Fig. 10** zeigt eine schematische Darstellung des Elektromotors aus Fig. 9 in abgewickeltem Zustand. Abgewickelt bezeichnet man eine Darstellung, bei der die runde Form des Stators 10 und des Rotors 18 auf eine Ebene projiziert werden.

Sämtliche Teilstränge 17 sind in diesem Ausführungsbeispiel gleichsinnig gewickelt. Die Statorpole sind mit S = 1 .. 18 und die Rotorpole mit R = 1 .. 12 durchnumeriert. Die Bestromung des Statorpols S = 1 erfolgt über den Schaltring 11, die Bestromung des Statorpols S = 2 erfolgt über den Schaltring 12, die Bestromung des Statorpols S = 3 erfolgt über den Schaltring 13, und die Bestromung des Statorpols S = 4 erfolgt wieder über den Schaltring 11. Dies setzt sich in regelmäßiger Reihenfolge bis zum letzten Statorpol S = 18 fort.

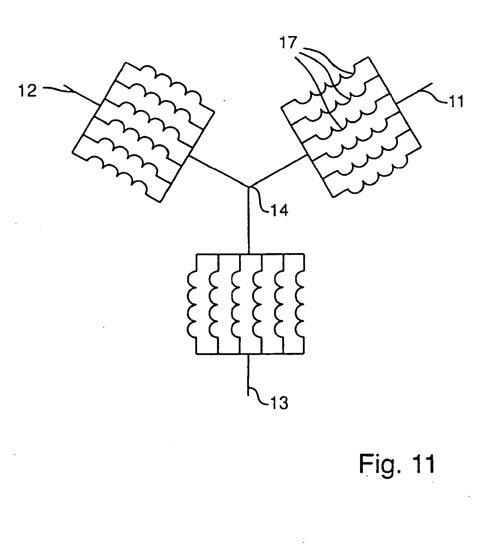

**Fig. 11** zeigt eine schematische Darstellung der sternpunktförmigen Statorwicklung des Stators 10 aus elektrischer Sicht. Das Zentrum bildet der Sternpunktring 14, und von diesem gehen drei Phasen (Stränge) zu den Schaltringen 11, 12 und 13. Jede Phase besteht jeweils aus sechs Teilsträngen, welche parallelgeschaltet sind.

Die Bestromung erfolgt, indem jeweils zwei der Phasen über die Schaltringe 11, 12 und/oder 13 bestromt werden. Beispielsweise wird durch Anlegen der Betriebsspannung + U_B an den Schaltring 11 und Anlegen der Masse GND an den Schaltring 13 die Statorwicklung zwischen den "Punkten" 11, 14 und 13 bestromt. Der Strang zwischen den "Punkten" 12 und 14 wird dagegen nicht bestromt.

Die Parallelschaltung der Teilstränge ist insbesondere vorteilhaft bei niederspannungsbetriebenen Motoren, z.B. in Autos mit 12 V-Batterien. Die maximale Leistung des Motors wird bei fester Spannung insbesondere durch den ohmschen Widerstand R der Stränge begrenzt.

Bei einem Motor mit drei Phasen, bei dem eine Phase nur einen Strang aufweist, wäre in solchen Fällen ein großer Drahtdurchmesser D (Drahtdicke), beispielsweise D = 2 mm, notwendig. Eine solche Drahtdicke D ist jedoch zum einen sehr schwer zu verarbeiten, insbesondere das für das Wickeln notwendige Biegen um die Hämmerchen ist kaum möglich. Zum anderen benötigt ein solcher Draht viel Platz, und man erhält einen Stator, der für seine Leistungsdichte viel Raum benötigt.

Durch die Parallelschaltung von sechs gleichen Teilsträngen (Spulen) zu einem Strang (Phase) und einer Sternschaltung der Stränge (Phasen) wird der Gesamtwiderstand der einzelnen Phase im Vergleich zu dem Widerstand des einzelnen Teilstrangs auf 1/6 verringert. Damit kann der Motor auch bei geringen Spannungen trotz einer Drahtdicke D von beispielsweise 0,7 mm eine hohe Leistung bieten.

### Weitere Vorteile der Statoranordnung

Durch die großen Querschnitte der Schaltring 11, 12, 13 und des Sternpunktrings 14 ist der Stator 10 auch für hohe Ströme (Hochstromtechnik) geeignet.

Die runde Grundform der Schaltringe 11, 12, 13 und des Sternpunktrings 14 erhöht die Symmetrie in der Zuleitung von den Anschlüssen 119, 129 bzw. 139 zu den einzelnen Kontakten. Unsymmetrien, welche zu Verlusten führen, werden weitgehend vermieden.

Da jeder Kontakt 112-116, 122-126 und 132-136, der nicht direkt an einem der Anschlüsse 119, 129, 139 sitzt, aus der Sicht der Anschlüsse 119, 129 bzw. 139 von beiden Seiten den Strom zugeführt bekommt, ist der Widerstand des Schaltrings 11, 12, 13 bzw. des Sternpunktrings 14 nochmals reduziert.

Der für die Verschaltung der einzelnen Wicklungen benötigte Schaltraum ist sehr gering. Es sind besonders flach bauende Motoren möglich. Eine Verschaltung über Drähte hat neben dem Problem des erhöhten Widerstands den großen Nachteil, dass viele Drähte übereinander liegen und damit in der Höhe einen großen Platz benötigen. Zusätzlich bereitet eine solche Verschaltung über Drähte in der Herstellung Schwierigkeiten und Kosten.

Da die Kontakte 111-116, 121-126 und 131-136 der Schaltringe 11, 12 und 13 in Bezug auf die Statorpole 151 radial außen liegen, und die Kontaktierungsenden 142 des Sternpunktrings 14 radial innen liegen, kann die Wicklung der einzelnen Teilstränge 17 entweder von radial außen nach radial innen oder umgekehrt erfolgen. Es muss also radial nicht notwendigerweise in zwei Richtungen gewickelt werden. Es kann jedoch beispielsweise auch zuerst von radial außen nach radial innen, dann umgekehrt und daraufhin wieder von radial außen nach radial innen gewickelt werden.

Die Kontakte 111-116, 121-126 und 131-136 der Schaltringe 11, 12 und 13 sind die einzigen Bereiche der Schaltringe 11, 12, 13, die in das Innere des Stators 10 ragen. Alle andere Bereich der Schaltringe 11, 12, 13 liegen radial außerhalb. Dies ist vorteilhaft, da somit der gesamte innere Bereich des Stators 10 den Statorpolen 151 und dem Rotor 18 zur Verfügung steht. Die Fertigung des Stators 10 wird durch die Wicklungsart einfach und damit günstig.

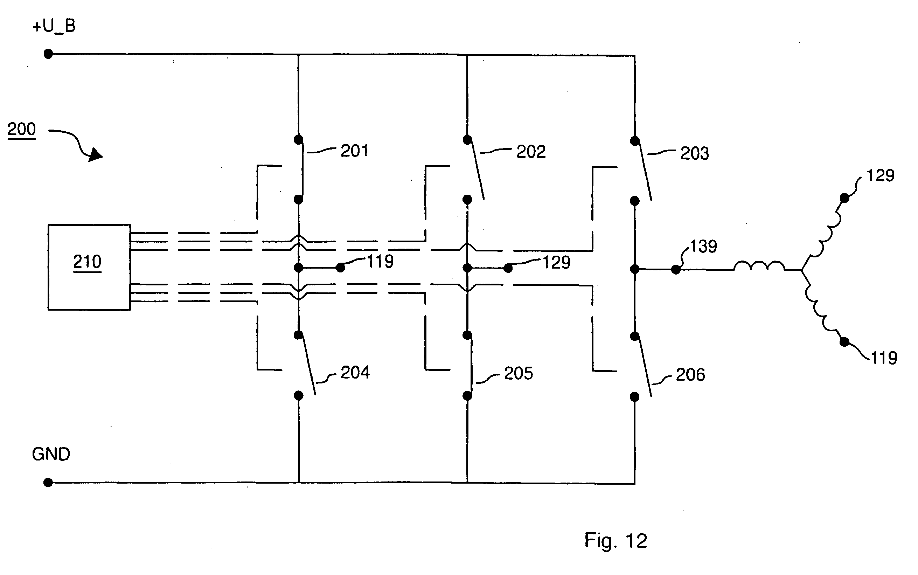

**Fig. 12** zeigt eine schematische Darstellung einer Endstufenanordnung 200. Die Endstufenanordnung weist drei obere Schalter 201, 202 und 203 und drei untere Schalter 204, 205, 206 auf, die von einer Endstufe 210 gesteuert werden. Über die Endstufe 210 wird bestimmt, ob an dem jeweiligen Anschluss 119, 129, 139 des jeweiligen Schaltrings 11, 12, 13 die Versorgungsspannung U_B, die Masse GND oder nichts angelegt wird. Diese Art der Schaltung wird als Vollbrückenschaltung bezeichnet.

Naturgemäß sind im Rahmen der Erfindung vielfache Abwandlungen und Modifikationen möglich.

## Patentansprüche

1. Elektromotor welcher aufweist:
Einen Rotor (18);
einen Stator (10) mit einer dreiphasigen Sternpunktwicklung (Fig. 11); eine Mehrzahl von Teilsträngen (17; 179), welche jeweils ein erstes Ende (171) und ein zweites Ende (172) haben;
ein am Stator (10) vorgesehenes genutetes Blechpaket (16), auf dessen mit Zahnköpfen (153) versehenen Zähnen (151) die Teilstränge (17; 179) angeordnet sind;
Schaltringe (11, 12, 13) und einen Sternpunktring (114), welche an mindestens einer Stirnseite des Blechpakets (16) und parallel zu dessen Blechen (15) angeordnet sind;
am Sternpunktring (114) vorgesehene radiale Fortsätze (141); die sich an einem Ende des Statorblechpakets (16) längs vorgegebener Zähne (151) und innerhalb des den vorgegebenen Zähnen (151) jeweils zugeordneten Teilstrangs (17; 179), und von diesem und den Zähnen isoliert, bis zu den Zahnköpfen (153) der vorgegebenen Zähne (151) erstrecken und freie Enden (142) aufweisen;
wobei das erste Ende (171) der Teilstränge (17; 179) jeweils mit einem zugeordneten Schaltring (11, 12, 13) und das zweite Ende (172) der Teilstränge (17; 179) jeweils im Bereich der freien Enden (142) der radialen Fortsätze (141) mit dem Sternpunktring (14) elektrisch verbunden ist;
um eine dreiphasige Sternpunktwicklung zu bilden, bei der in jedem Strang Teilstränge (17; 179) parallelgeschaltet sind.

2. Elektromotor nach Anspruch 1, bei welchem die radialen Fortsätze (141) des Sternpunktrings (114) im Bereich ihrer freien Enden (142) einen Abschnitt aufweisen, welcher nicht elektrisch isoliert ist.

3. Elektromotor nach einem der vorhergehenden Ansprüche, bei welchem die Schaltringe (11, 12, 13) eine Mehrzahl von Kontakten (111 bis 116, 121 bis 126, 131 bis 136) aufweisen, welche jeweils zur Kontaktierung des Endes (171) eines Teilstrangs (17; 179) ausgebildet sind.

4. Elektromotor nach einem der vorhergehenden Ansprüche, bei welchem die Schaltringe (11, 12, 13) und der Sternpunktring (14) jeweils aus einem elektrisch gut leitenden Stoff gefertigt sind.

5. Elektromotor nach einem der vorhergehenden Ansprüche, bei welchem die Schaltringe (11, 12, 13) untereinander zur Vermeidung eines direkten Kontakts elektrisch isoliert sind.

6. Elektromotor nach einem der vorhergehenden Ansprüche, bei welchem der Sternpunktring (14) von den Schaltringen (11, 12, 13) und dem Statorblechpaket (16) elektrisch isoliert ist.

7. Elektromotor nach einem der vorhergehenden Ansprüche, bei welchem jeweils ein Ende (171, 172) der Teilstränge (17; 179) durch eine Lötverbindung mit dem zugeordneten Schaltring (11, 12, 13) und/oder dem Sternpunktring (114) verbunden ist.

8. Elektromotor nach einem der vorhergehenden Ansprüche, bei welchem jeweils ein Ende (171, 172) der Teilstränge (17) durch eine Rastverbindung mit dem zugeordneten Schaltring (11, 12, 13) und/oder dem Sternpunktring (114) verbunden ist.

9. Elektromotor nach einem der vorhergehenden Ansprüche, bei welchem jeweils ein Ende (171, 172) der Teilstränge (17; 179) durch eine Klemmverbindung mit dem zugeordneten Schaltring (11, 12, 13) und/oder dem Sternpunktring (114) verbunden ist.

10. Elektromotor nach einem der vorhergehenden Ansprüche, bei welchem jeweils ein Ende (171, 172) der Teilstränge (17; 179) durch eine Crimpverbindung mit dem zugeordneten Schaltring (11, 12, 13) und/oder dem Sternpunktring (114) verbunden ist.

11. Elektromotor nach einem der vorhergehenden Ansprüche, welcher als Innenläufermotor ausgebildet ist,
und bei welchem jeder Schaltring (11, 12, 13) und das Statorblechpaket (16) einen hohlzylindrischen Bereich (118, 155) aufweisen,
und bei welchem der hohlzylindrische Bereich (118) jedes Schaltrings (11, 12, 13) im wesentlichen den gleichen Durchmesser hat wie der hohlzylindrische Bereich (155) des Statorblechpakets (16).

12. Elektromotor nach einem der vorhergehenden Ansprüche, welcher als Innenläufermotor ausgebildet ist, bei welchem die Schaltringe (11, 12, 13) eine Mehrzahl von radial nach innen ragenden Kontakten (112 bis 116, 121 bis 126, 131 bis 136) zur Verbindung mit Enden (171) der Teilstränge (17; 179) aufweisen,
und die anderen Bereiche der Schaltringe (11, 12, 13) radial weiter außen liegen.

## Claims

1. Electric motor, having:
a rotor (18);
a stator (10) with a three-phase star point winding (Fig. 11);
multiple partial phases (17; 179), each of which has a first end (171) and a second end (172);
a grooved laminated core (16), which is provided on the stator (10), and on the teeth (151) of which, which are provided with tooth tips (153), the partial phases (17; 179) are arranged;
connector rings (11, 12, 13) and a star point ring (114), which are arranged on at least one face of the laminated core (16), and parallel to its sheets (15);
radial extensions (141) which are provided on the star point ring (114), extend at one end of the stator laminated core (16) along predetermined teeth (151), and within the partial phase (17; 179), which is associated with the predetermined teeth (151), as far as the tooth tips (153) of the predetermined teeth (151), are insulated from the partial phase (17; 179) and the teeth, and have free ends (142);
the first ends (171) of the partial phases (17; 179) each being electrically connected to an associated connector ring (11, 12, 13), and the second ends (172) of the partial phases (17; 179) each being electrically connected to the star point ring (14) in the region of the free ends (142) of the radial extensions (141);
to form a three-phase star point winding, wherein in every phase partial phases (17; 179) are connected in parallel.

2. Electric motor according to Claim 1, wherein the radial extensions (141) of the star point ring (114), in the region of their free ends (142), have a section which is not electrically insulated.

3. Electric motor according to one of the preceding claims, wherein the connector rings (11, 12, 13) have multiple contacts (111 to 116, 121 to 126, 131 to 136), each of which is in a form to contact the end (171) of a partial phase (17; 179).

4. Electric motor according to one of the preceding claims, wherein the connector rings (11, 12, 13) and star point ring (14) are each manufactured from an electrically well conducting material.

5. Electric motor according to one of the preceding claims, wherein the connector rings (11, 12, 13) are electrically insulated from each other, to avoid direct contact.

6. Electric motor according to one of the preceding claims, wherein the star point ring (14) is electrically insulated from the connector rings (11, 12, 13) and the stator laminated core (16).

7. Electric motor according to one of the preceding claims, wherein one end (171, 172) of each of the partial phases (17; 179) is connected to the associated connector ring (11, 12, 13) and/or to the star point ring (114) by a soldered joint.

8. Electric motor according to one of the preceding claims, wherein one end (171, 172) of each of the partial phases (17; 179) is connected to the associated connector ring (11, 12, 13) and/or to the star point ring (114) by a snap-in connection.

9. Electric motor according to one of the preceding claims, wherein one end (171, 172) of each of the partial phases (17; 179) is connected to the associated connector ring (11, 12, 13) and/or to the star point ring (114) by a clamped connection.

10. Electric motor according to one of the preceding claims, wherein one end (171, 172) of each of the partial phases (17; 179) is connected to the associated connector ring (11, 12, 13) and/or to the star point ring (114) by a crimped connection.

11. Electric motor according to one of the preceding claims, which is in the form of an internal rotor motor, and wherein each connector ring (11, 12, 13) and the stator laminated core (16) have a hollow cylindrical region (118, 155), and wherein the hollow cylindrical region (118) of each connector ring (11, 12, 13) has essentially the same diameter as the hollow cylindrical region (155) of the stator laminated core (16).

12. Electric motor according to one of the preceding claims, which is in the form of an internal rotor motor, and wherein the connector rings (11, 12, 13) have multiple contacts extending radially inward (112 to 116, 121 to 126, 131 to 136) for connection to ends (171) of the partial phases (17; 179), and the other regions of the connector rings (11, 12, 13) are radially further out.

## Revendications

1. Moteur électrique, lequel présente :
un rotor (18) ;
un stator (10) avec un enroulement triphasé à point neutre (fig. 11) ;
une pluralité de phases partielles (17 ; 179), lesquelles ont chacune une première extrémité (171) et une deuxième extrémité (172) ;
un paquet de tôles (16) muni d'encoches prévu sur le stator (10), sur les dents (151) munies de têtes de dent (153) duquel sont disposées les phases partielles (17 ; 179) ; des bagues de commutation (11, 12, 13) et une bague de point neutre (114), lesquelles sont disposées sur au moins une face frontale du paquet de tôles (16) et parallèlement à ses tôles (15) ;
des prolongements radiaux (141) prévus sur la bague de point neutre (114) qui s'étendent à une extrémité du paquet de tôles de stator (16) le long de dents (151) prédéfinies et à l'intérieur de la phase partielle (17 ; 179) associée aux dents (151) prédéfinies et isolée de celle-ci et des dents, jusqu'aux têtes de dent (153) des dents (151) prédéfinies, et présentent des extrémités libres (142) ;
la première extrémité (171) des phases partielles (17 ; 179) étant reliée chaque fois à une bague de commutation (11, 12, 13) associée et la deuxième extrémité (172) des phases partielles (17 ; 179) à la bague de point neutre (114) chaque fois au niveau des extrémités libres (142) des prolongements radiaux (141) ;
pour former un enroulement triphasé à point neutre dans lequel des phases partielles (17 ; 179) sont montées en parallèle dans chaque phase.

2. Moteur électrique selon la revendication 1, dans lequel les prolongements radiaux (141) de la bague de point neutre (114) présentent au niveau de leurs extrémités libres (142) une portion qui n'est pas isolée électriquement.

3. Moteur électrique selon une des revendications précédentes, dans lequel les bagues de commutation (11, 12, 13) présentent une pluralité de contacts (111 à 116, 121 à 126, 131 à 136), lesquels sont conçus pour contacter l'extrémité (171) d'une phase partielle (17 ; 179).

4. Moteur électrique selon une des revendications précédentes, dans lequel les bagues de commutation (11, 12, 13) et la bague de point neutre (14) sont chacune réalisées dans une matière bien conductrice électriquement.

5. Moteur électrique selon une des revendications précédentes, dans lequel les bagues de commutation (11, 12, 13) sont isolées électriquement entre elles pour éviter un contact direct.

6. Moteur électrique selon une des revendications précédentes, dans lequel la bague de point neutre (14) est isolée électriquement des bagues de commutation (11, 12, 13) et du paquet de tôles de stator (16).

7. Moteur électrique selon une des revendications précédentes, dans lequel chaque fois une extrémité (171, 172) des phases partielles (17, 179) est reliée à la bague de commutation (11, 12, 13) associée et/ou à la bague de point neutre (14) par une liaison brasée.

8. Moteur électrique selon une des revendications précédentes, dans lequel chaque fois une extrémité (171, 172) des phases partielles (17 ; 179) est reliée à la bague de commutation (11, 12, 13) associée et/ou à la bague de point neutre (14) par une liaison par encliquetage.

9. Moteur électrique selon une des revendications précédentes, dans lequel chaque fois une extrémité (171, 172) des phases partielles (17) est reliée à la bague de commutation (11, 12, 13) associée et/ou à la bague de point neutre (14) par une liaison par serrage.

10. Moteur électrique selon une des revendications précédentes, dans lequel chaque fois une extrémité (171, 172) des phases partielles (17) est reliée à la bague de commutation (11, 12, 13) associée et/ou à la bague de point neutre (14) par une liaison sertie.

11. Moteur électrique selon une des revendications précédentes, lequel est réalisé sous forme de moteur à rotor intérieur,
et dans lequel chaque bague de commutation (11, 12, 13) et le paquet de tôles de stator (16) présentent une zone cylindrique creuse (118),
et dans lequel la zone cylindrique creuse (118) de chaque bague de commutation (11, 12, 13) a essentiellement le même diamètre que la zone cylindrique creuse (155) du paquet de tôles de stator (16).

12. Moteur électrique selon une des revendications précédentes, lequel est réalisé sous forme de moteur à rotor intérieur, dans lequel les bagues de commutation (11, 12, 13) présentent une pluralité de contacts (111 à 116, 121 à 126, 131 à 136) en saillie radiale vers l'intérieur pour la liaison avec les extrémités (171) des phases partielles (17),
et les autres zones des bagues de commutation (11, 12, 13) sont situées radialement plus loin vers l'extérieur.
